# DEMANDE DE BREVET EUROPEEN

(11) **EP 4 236 392 A2**
(43) Date de publication de la demande: **30.08.2023**
(21) Numéro de dépôt: 23178677.3
(22) Date de dépôt: 11.04.2012
(51) Int. Cl.: H04W 4/33

(54) **PROCEDE DE COMMUNICATION D'UNE INFORMATION SPATIALEMENT LOCALISEE A UN TERMINAL MOBILE**

(62) Demande divisionnaire de: 21173368.8
(71) Demandeur: SES-imagotag, 92000 Nanterre (FR)
(72) Inventeur: BOTTINE, Philippe, 92100 BOULOGNE-BILLANCOURT (FR); ROBIN, François, 75116 PARIS (FR)
(74) Mandataire: Regimbeau

(57) **Abrégé**

L'invention concerne un procédé de communication de données représentatives d'une information spatialement localisée à un terminal mobile (1) en fonction de la localisation dudit terminal mobile (1) dans une surface de vente munie d'une série d'étiquettes électroniques répartie, le procédé comprenant les étapes suivantes :
- le terminal mobile (1) établit une communication par radiofréquence avec un périphérique radiofréquence d'une étiquette électronique (3),
- le périphérique radiofréquence (36) communique audit terminal mobile (1) un identifiant d'étiquette de ladite étiquette électronique (3),
- le terminal mobile (1) communique ledit identifiant d'étiquette à un serveur central (2),
- le serveur central (2) détermine une localisation dudit terminal mobile (1),
- le serveur central (2) communique au terminal mobile (1) des données représentatives d'une information spatialement localisée.

## Description

### DOMAINE TECHNIQUE GENERAL ET contexte de l'invention

La présente invention concerne de manière générale l'affichage d'informations dans une surface de vente.

L'affichage d'informations relatives à des articles présentés à la vente dans une surface de vente se fait généralement au moyen d'étiquettes affichant notamment le prix de l'article auquel une étiquette est associée, ainsi que d'autres informations telles que le prix au poids, etc...

La nécessité de disposer d'un affichage d'informations à jour a justifié l'implantation dans de nombreuses surfaces de vente d'étiquettes électroniques disposant d'un écran sur lequel l'affichage d'informations est commandé à distance.

L'utilité de tels systèmes est essentiellement de permettre, au niveau des rayonnages d'un site tel qu'un supermarché, hypermarché ou toute autre surface de vente, de présenter au consommateur, pour chaque article présenté à la vente, un prix correspondant de façon fiable au prix tel qu'il figure dans le fichier central du site, c'est-à-dire au prix tel qu'il sera effectivement utilisé en caisse pour le paiement de l'article.

Un autre avantage de ces systèmes connus est de permettre de réaliser des changements de prix automatisés dans des délais beaucoup plus courts qu'avec un affichage manuel, que ce soit pour des périodes particulières de promotion sur le site, pour tout ou partie des articles présentés à la vente, pour répercuter des changements de tarifs, pour faire face à des situations d'inflation où les prix doivent être augmentés très fréquemment, etc...

D'autre part, il existe en matière d'affichage de prix de nombreuses contraintes, notamment légales, quant à la nature des prix affichés (prix unitaire, prix promotionnel, etc...), qui doivent être respectés par les systèmes électroniques de la même manière que par les affichages papier.

Ainsi les systèmes d'étiquettes électroniques, bien qu'ils tendent à devenir de plus en plus sophistiqués au fil du temps, restent toutefois relativement rigides quant aux différentes possibilités d'affichage, et quant à l'organisation temporelle et spatiale de ces différentes possibilités.

En outre, ces étiquettes électroniques permettent seulement d'afficher des informations relatives à l'article auxquels chacune d'entre elle est associée, et qui plus est, des informations généralement circonscrites au prix affiché par les étiquettes.

De plus, le consommateur est aujourd'hui livré à lui-même dans une surface de vente face à des informations relatives aux seuls articles. Il lui revient de naviguer à travers ces informations pour y trouver celles qui lui sont pertinentes. De fait, dans une surface de vente présentant généralement plusieurs milliers d'articles, trouver un article pertinent peut se révéler très compliqué.

En outre, l'émergence du commerce électronique a fait naître chez le consommateur l'habitude d'une information qui lui est spécifiquement destinée. Or, l'affichage des informations tel qu'il est actuellement pratiqué dans les surfaces de vente n'offre aucune interaction avec le consommateur.

Il n'existe aujourd'hui aucun moyen de diffuser des informations spécifiquement à l'attention d'un consommateur en relation avec sa position dans le magasin, voire avec un produit spécifique à ce consommateur.

### PRESENTATION DE L'INVENTION

La présente invention vise ainsi à proposer un moyen de fournir à un consommateur des informations spatialement localisées, en fonction de l'endroit et du contexte où se trouve ce consommateur, qui soient complémentaires des informations déjà visuellement disponibles dans une surface de vente.

Un autre objectif est de pouvoir fournir au consommateur, sur le lieu de vente, des informations destinées spécifiquement à ce consommateur et personnalisées pour lui.

A cet effet, on propose selon un premier aspect un procédé de communication de données représentatives d'une information spatialement localisée à un terminal mobile en fonction de la localisation dudit terminal mobile dans une surface de vente munie d'une série d'étiquettes électroniques répartie, chaque étiquette électronique étant identifiée par un unique identifiant d'étiquette,
ledit procédé comprenant les étapes selon lesquelles :
- un terminal mobile établit une communication par radiofréquence avec un périphérique radiofréquence d'une étiquette électronique,
- le périphérique radiofréquence de ladite étiquette électronique communique audit terminal mobile un identifiant d'étiquette de ladite étiquette électronique,
- le terminal mobile communique ledit identifiant d'étiquette à un serveur central,
- le serveur central détermine une localisation dudit terminal mobile à partir de l'identifiant d'étiquette de ladite étiquette électronique,
- le serveur central communique au terminal mobile des données représentatives d'une information spatialement localisée associée à la localisation dudit terminal mobile.

L'invention selon le premier aspect est avantageusement mais facultativement complétée par les caractéristiques suivantes, prises seules ou en une quelconque de leur combinaison techniquement possible :
- le périphérique radiofréquence de l'étiquette électronique a une portée de communication inférieure à 20 cm ;
- l'établissement de la communication entre le terminal mobile et le périphérique radiofréquence comprend les étapes selon lesquelles :
   - un utilisateur amène le terminal mobile à proximité du périphérique radiofréquence de l'étiquette électronique, de sorte que le périphérique radiofréquence soit à portée d'ondes électromagnétiques émises par le terminal mobile,
   - ledit périphérique radiofréquence est activé par l'énergie des ondes électromagnétiques émises par le terminal mobile afin d'établir la communication par radiofréquence entre le périphérique radiofréquence de l'étiquette électronique et le terminal mobile ;
- le serveur central détermine une localisation dudit terminal mobile à partir de l'identifiant de ladite étiquette électronique au moyen de données d'un planogramme associant une localisation à l'identifiant d'étiquette ;
- la communication entre le serveur central et le terminal mobile est établie via le réseau internet ;
- les données représentatives d'une information spatialement localisée associée à la localisation dudit terminal mobile prennent en compte des données spécifiques à l'utilisateur du terminal mobile, préalablement stockées dans une base de données accessible par un réseau de communication.

Selon un second aspect, on propose également un système de communication de données localisées dans une surface de vente comprenant :
- un terminal mobile apte à communiquer avec un serveur central,
- une série d'étiquettes électroniques répartie dans la surface de vente, chaque étiquette électronique étant identifiée par un unique identifiant d'étiquette, dans lequel une étiquette électronique de ladite série d'étiquettes électroniques comporte également un périphérique radiofréquence avec lequel le terminal mobile peut établir une communication pour acquérir l'identifiant d'étiquette de ladite étiquette,
et le système est configuré pour mettre en oeuvre le procédé selon le premier aspect.

L'invention selon le second aspect est avantageusement mais facultativement complétée par les caractéristiques suivantes, prises seules ou en une quelconque de leur combinaison techniquement possible :
- ladite étiquette électronique comporte également
   - un module de communication radiofréquence pour recevoir des données représentatives d'informations relatives à un article en provenance d'une station centrale,
   - une mémoire pour stocker lesdites données,
   - un microcontrôleur pour commander l'affichage des informations relatives à un article,
   - un écran d'affichage pour l'affichage desdites informations relatives à un article ;
- le périphérique radiofréquence de l'étiquette électronique comprend une antenne et une puce électronique de type NFC ou RFID ;
- la puce et l'antenne sont agencées en des endroits différents de l'étiquette électronique, des connexions assurant la liaison entre l'antenne et la puce ;
- la puce est connectée à un microcontrôleur de l'étiquette électronique, et l'antenne est disposée sur ou dans un boîtier à l'intérieur duquel est logé ledit microcontrôleur ;
- le terminal mobile est adapté pour transmettre des données à l'étiquette électronique via le périphérique radiofréquence de ladite étiquette électronique.

### PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels :
- la figure 1 est un schéma illustrant le système selon un mode de réalisation possible du second aspect de l'invention ;
- la figure 2 est un schéma illustrant une vue de l'avant d'une étiquette électronique d'un système selon un mode de réalisation possible du second aspect de l'invention ;
- la figure 3 est une vue par transparence de l'arrière d'une étiquette électronique d'un système selon un mode de réalisation possible du second aspect de l'invention ;

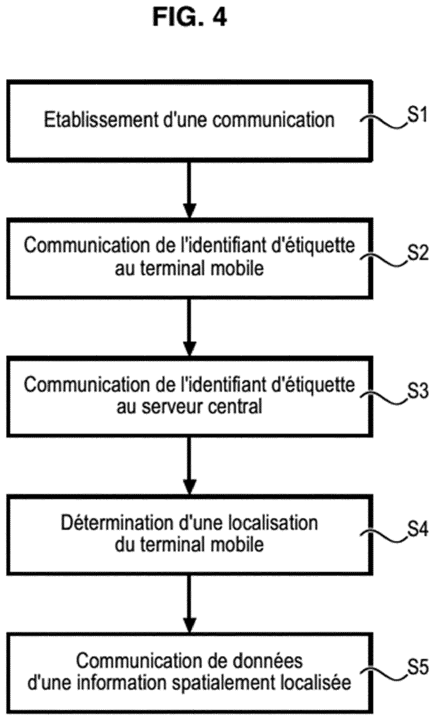

- la figure 4 est un schéma illustrant la mise en oeuvre du procédé selon le premier aspect de l'invention.

### Description détaillée

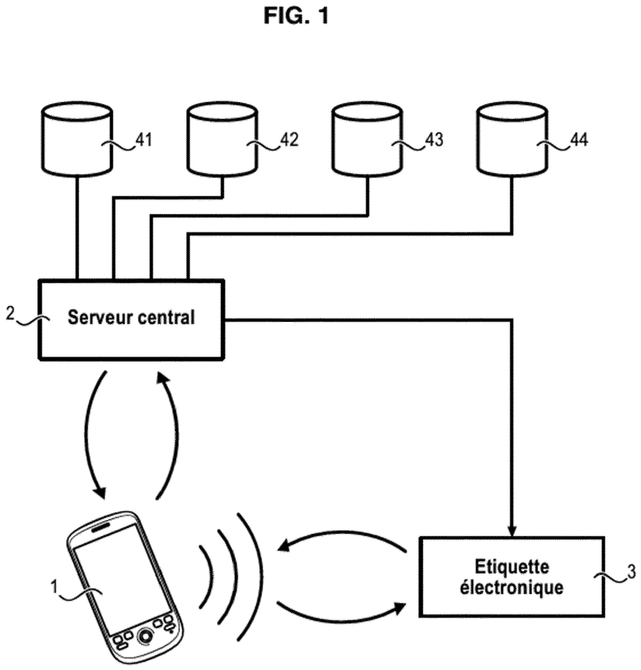

Sur la figure 1 est représenté, dans un but illustratif et non limitatif, un système de communication de données représentatives d'une information spatialement localisée dans une surface de vente, correspondant à un mode de réalisation possible de l'invention.

Le système illustré comprend un terminal mobile 1 apte à communiquer avec un serveur central 2. Ce terminal mobile 1 est de préférence muni de moyens d'affichage d'informations, tel qu'un écran, à destination d'un utilisateur dudit terminal mobile 1.

La communication entre le terminal mobile 1 et le serveur central 2 peut être établi au moyen de tout réseau de communication au moins partiellement sans fil, notamment via un réseau sans fil de type WIFI ou 3G. Ainsi la communication peut être établie en passant par le réseau internet auquel est relié le serveur central 2.

Afin de faciliter cette communication, la surface de vente peut disposer de bornes WIFI établissant une connexion entre le terminal mobile 1 et le réseau internet auquel est connecté le serveur central 2.

Un exemple courant d'un tel terminal mobile 1 est un téléphone portable de type smartphone, qui offre à la fois des possibilités de connexion et de traitement d'informations appropriées. En outre, la généralisation de ce type de téléphone permet à un grand nombre de consommateurs d'utiliser leur propre terminal mobile 1. D'autres terminaux mobiles peuvent être utilisés dès lors qu'ils répondent aux exigences de communicabilité avec le serveur central et de capacité d'afficher des informations à leur utilisateur. Par exemple, une tablette tactile peut être utilisée en tant que terminal mobile 1.

Le système comprend également une série d'étiquettes électroniques répartie dans la surface de vente. Les étiquettes présentent une forte densité spatiale, typiquement une dizaine d'étiquettes/m² en moyenne avec une variabilité importante.

Chaque étiquette électronique 3 est identifiée par un unique identifiant d'étiquette qui lui est propre. Cette identifiant d'étiquette permet donc d'identifier de manière univoque une seule et unique étiquette de la surface de vente.

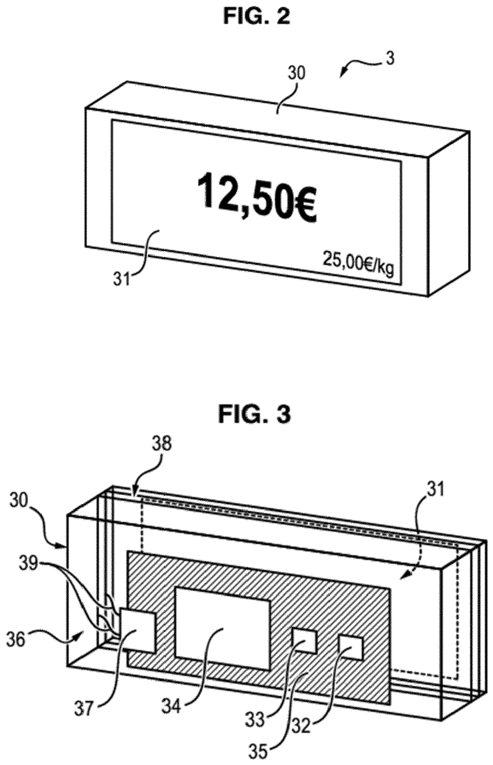

Les figures 2 et 3 illustrent un exemple d'étiquette électronique 2 dans le cadre de l'invention. Une telle étiquette électronique comporte un écran d'affichage 31 pour l'affichage d'informations relatives à un article auquel elle est associée. Typiquement, et ainsi qu'illustré sur la figure 2, ces informations comprennent le prix de l'article, et d'autres informations habituellement disponibles dans une surface de vente, par exemple le prix par kilogramme pour un produit alimentaire. L'étiquette électronique comporte également un boîtier 30 en plastique à l'intérieur duquel sont logés les constituants fonctionnels de l'étiquette électronique 3.

Notamment, l'étiquette électronique 3 comporte un module de communication radiofréquence 32 pour recevoir des données représentatives d'informations relatives à un article en provenance d'une station centrale, une mémoire 33 pour stocker lesdites données, et un microcontrôleur 34 pour commander l'affichage des informations relatives à l'article. Ces différents constituants fonctionnels sont disposés sur une carte de circuit imprimé 35 logée dans le boîtier 30.

L'étiquette électronique 3 de ladite série d'étiquettes électroniques comporte également un périphérique radiofréquence 36 avec lequel le terminal mobile 1 peut établir une communication pour acquérir l'identifiant d'étiquette de ladite étiquette électronique 3.

Le périphérique radiofréquence 36 de l'étiquette électronique 3 comprend une antenne 38 et une puce électronique 37 de type NFC (acronyme de l'anglais Near Field Communication pour communication en champ proche) ou RFID (acronyme de l'anglais Radio Frequency Identification pour identification radiofréquence).

Un périphérique radiofréquence de type NFC fonctionne avec une fréquence de 13,56 Mhz comme un périphérique radiofréquence de type RFID HF.

Un périphérique radiofréquence de type NFC correspond au protocole ISO 14443, très sécurisé avec cryptage. La communication par NFC tend à se répandre dans les terminaux mobiles personnels tels que les téléphones portables, et par conséquent offre l'avantage d'un déploiement massif.

L'application qui en est faite dans les étiquettes électroniques 3 ne nécessitant pas de niveau de sécurité élevé, un périphérique radiofréquence de type RFID HF (protocole ISO 15693) est tout à fait adapté à cet usage et son plus faible coût le rend plus attractif.

Les terminaux mobiles dotés de NFC ne supportaient initialement que le protocole ISO 14443 mais les nouveaux appareils sont majoritairement bi-modes et il est à prévoir que le développement futur sera à la bi-modalité.

De préférence, la puce 37 et l'antenne 38 sont agencées en des endroits différents de l'étiquette électronique 3, des connexions 39 assurant la liaison entre l'antenne 38 et la puce 37.

De préférence encore, la puce 37 est connectée au microcontrôleur 34 de l'étiquette électronique 3, et l'antenne 38 est disposée sur ou dans le boîtier 30 à l'intérieur duquel est logé ledit microcontrôleur 34. De préférence encore, l'antenne 38 est disposée du côté de la face avant de l'étiquette électronique 3, vers son écran d'affichage 31, tandis que la puce électronique 37 est disposée sur la carte de circuit imprimé 35, du côté de la face arrière de l'étiquette électronique 3.

En effet, l'intégration d'un périphérique radiofréquence 36 rassemblant sur un même support puce et antenne n'est pas souhaitable sur la face avant de l'étiquette électronique 3, car préjudiciable à la maximisation de la surface d'affichage de l'écran d'affichage 31, afin notamment de permettre la densification des étiquettes électroniques 3 sur une gondole de présentation d'articles, spécialement dans le cas de petits articles.

En outre, la connectique entre la puce électronique 37 et le microcontrôleur 34 peut être complexe et délicate à réaliser industriellement à un coût réduit. La puce 37 est alors de préférence implantée sur la carte de circuit imprimé, facilitant ainsi la connexion de celle-ci au microcontrôleur 34.

Cependant, un positionnement de l'antenne sur la face arrière à l'intérieur à côté de la puce 37 réduirait la distance et la fiabilité de lecture puisque celle-ci devrait alors se faire à travers l'écran d'affichage 31 de l'étiquette électronique 3 (typiquement d'une épaisseur de 1cm) et les perturbations électromagnétiques induites par la carte de circuit imprimé.

Il est donc préférable de séparer l'antenne 38 de la puce 37. La puce 37 est alors de préférence implantée sur la carte de circuit imprimé, facilitant ainsi la connexion de celle-ci au microcontrôleur 34.

L'antenne 38 est donc de préférence intégrée dans le boitier 30 en plastique, vers l'avant de celui-ci, préférentiellement autour de la réserve accueillant l'écran d'affichage 31 et surmoulée à l'injection lors de la fabrication du boîtier 30. La taille de l'antenne 38 peut être maximisée et ainsi permettre d'augmenter la distance de communication.

Cependant, dans tous les cas, cette distance de communication avec le périphérique radiofréquence 36 sera choisie relativement faible, inférieur à 20 cm, et de préférence encore inférieure à 10 cm, par rapport à l'antenne 38.

De préférence, le terminal mobile 1 est adapté pour transmettre des données à l'étiquette électronique 3 via le périphérique radiofréquence 36 de ladite étiquette électronique 3. Ainsi, l'affichage de l'étiquette électronique 3 peut être mis à jour par le terminal mobile 1.

Le système de communication de données représentatives d'une information spatialement localisée dans une surface de vente est configuré pour mettre en oeuvre le procédé selon le premier aspect de l'invention, dont un mode de réalisation possible va être décrit.

Le procédé permet de communiquer des données représentatives d'une information spatialement localisée au terminal mobile 1 en fonction de la localisation dudit terminal mobile 1 dans une surface de vente munie d'une série d'étiquettes électroniques 3 répartie, chaque étiquette électronique 3 étant identifiée par un unique identifiant d'étiquette qui lui est propre.

Premièrement, le terminal mobile 1 établit une communication par radiofréquence avec un périphérique radiofréquence 36 d'une étiquette électronique 3 (étape S1).

Pour ce faire, un utilisateur, amène le terminal mobile 1 à proximité du périphérique radiofréquence 36 de l'étiquette électronique 3, de sorte que le périphérique radiofréquence 36 soit à portée d'ondes électromagnétiques émises par le terminal mobile 1.

Le périphérique radiofréquence 36 est alors activé par l'énergie des ondes électromagnétiques émises par le terminal mobile 1 afin d'établir une communication par radiofréquence avec le périphérique radiofréquence 36 de l'étiquette électronique 3.

Le périphérique radiofréquence 36 de ladite étiquette électronique 3 communique ensuite audit terminal mobile 1 un identifiant d'étiquette de ladite étiquette électronique 3 (étape S2). Cet identifiant d'étiquette peut être communiqué seul, ou accompagné d'autres informations, ou bien encore par la communication de données, qui sont au moins partiellement générées à partir dudit identifiant, et qui permettent d'identifier l'étiquette électronique 3 dans la surface de vente.

Le terminal mobile 1 communique ledit identifiant d'étiquette à un serveur central 2 (étape S3). De la même manière, les données communiquées doivent permettre d'identifier l'étiquette électronique 3 dans la surface de vente, et ne prennent pas nécessairement la forme du seul identifiant d'étiquette. Ainsi, les données échangées entre le terminal mobile 1 et le serveur central 2 peuvent être les mêmes ou bien être différentes de celles échangées entre l'étiquette électronique 3 et le terminal mobile 1, la seule exigence étant la possibilité d'identification de l'étiquette électronique 3 dans la surface de vente.

Le serveur central 2 détermine une localisation dudit terminal mobile 1 à partir de l'identifiant d'étiquette de ladite étiquette électronique 3 (étape S4). Le serveur central 2 détermine alors une localisation dudit terminal mobile 1 à partir de l'identifiant de ladite étiquette électronique 3 au moyen de données d'un planogramme associant une localisation à l'identifiant d'étiquette. Un planogramme répertorie la localisation de l'ensemble des étiquettes électroniques 3, ainsi que des articles présents dans la surface de vente.

Jusqu'à 10% des articles d'une surface de vente peuvent être présents à plusieurs emplacements distincts, et par conséquent, la seule connaissance de l'article, par exemple par un identifiant d'article tel qu'un code barre ou un code produit électronique (ou EPC pour l'anglais Electronic Product Code), ne permet pas de déterminer la localisation précise du terminal mobile 1.

L'unicité de l'identifiant d'étiquette et de la localisation associée à chaque étiquette électronique 3 permet en revanche de déterminer de façon univoque la localisation de l'étiquette électronique 3 à partir de son identifiant, et par conséquent de déterminer la localisation du terminal mobile 1.

En effet, le terminal mobile 1 se trouve à proximité immédiate de l'étiquette électronique 3 duquel il a acquis l'identifiant, de sorte que la localisation de l'étiquette permet de déterminer la localisation du terminal mobile 1.

De fait, la portée de communication du périphérique radiofréquence 36 est de préférence inférieure à 20 cm, de préférence encore inférieure à 10 cm, voire 5 cm. En effet, une portée relativement faible d'une part assure la correspondance entre la localisation de l'étiquette électronique 3 et le terminal mobile 1, et d'autre part permet de limiter les interférences entre des étiquettes électroniques lorsqu'elles sont proches les unes des autres.

De plus, une faible portée nécessite une action volontaire de l'utilisateur du terminal mobile 1 pour l'établissement de la communication entre le terminal mobile 1 et l'étiquette électronique 3. L'utilisateur n'a dès lors pas à craindre pour la protection de sa vie privée, et le système se révélant peu intrusif, est difficilement détournable de sa vocation première exposée dans cette description.

Une fois la localisation du terminal mobile 1 déterminée, le serveur central 2 communique au terminal mobile 1 des données représentatives d'une information spatialement localisée associée à la localisation dudit terminal mobile 1 (étape S5).

Ces données représentatives d'une information spatialement localisée associée à la localisation dudit terminal mobile 1 peuvent prendre en compte des données spécifiques à l'utilisateur du terminal mobile 1, préalablement stockées dans une base de données 41, 44 accessible par un réseau de communication.

Par exemple, une base de données 41 peut comprendre une liste de course préalablement définie par l'utilisateur, et la base de données 44 peut comprendre des données de santé entrées par l'utilisateur, au moyen desquelles des informations sur des articles peuvent être mises en correspondance avec des informations personnelles, par exemple des contre-indications médicales telle que la présence d'allergènes spécifiés par l'utilisateur.

D'autres bases de données 42, 43 peuvent être utilisées, et comprendre notamment le planogramme, des informations relatives aux articles, relatives à la surface de vente, etc...

Ainsi, l'étiquette électronique peut être utilisée comme un capteur de contexte, puisqu'elle permet de déterminer le contexte du terminal mobile avec lequel elle est en communication.

On peut dès lors prévoir par exemple une application web pour délivrer au terminal mobile des informations relatives à l'article à proximité duquel se trouve le terminal mobile, et donc l'utilisateur dudit terminal mobile, notamment des fiches techniques, des recettes de cuisine ou encore une proposition de produit de substitution ou des offres promotionnelles complémentaires.

L'utilisateur peut également bénéficier d'une application web prenant en compte les articles dont les identifiants d'étiquettes associées ont été acquis par le terminal mobile 1, par exemple pour afficher le prix total desdits articles lors d'une session d'achat.

On peut aussi prévoir une application web capable de mettre à jour une liste de courses au fur et à mesure de l'acquisition d'identifiants d'étiquettes associées à des articles de cette liste de course. Connaissant la localisation du terminal mobile 1, il est alors possible d'indiquer à l'utilisateur la direction d'un article présent sur sa liste de course, et par conséquent de planifier le déplacement de l'utilisateur dans la surface de vente.

Plus généralement, la connaissance de la localisation du terminal mobile 1, donc de son utilisateur, permet de fournir audit terminal mobile 1 des informations spatialement localisées, comme le chemin à suivre pour atteindre un article précis.

La localisation au moyen des étiquettes électroniques 3 permet une granulosité de repères jamais atteinte par des systèmes de localisation de type GPS. En effet, chaque mètre de gondole de présentation de produit disposant de plusieurs étiquettes 3 à des hauteurs différentes, il est même possible de localiser la hauteur du terminal mobile 1.

Par exemple, en recherche d'un article particulier, l'utilisateur approche son terminal mobile 1 d'une étiquette électronique 3. La mise en oeuvre du procédé selon l'invention permet de communiquer au terminal mobile 1 des informations sur l'emplacement du produit recherché, relativement au terminal mobile 1. On indique par exemple par une flèche selon une direction diagonale haut/droite et une indication de distance, par exemple 50 cm, pour indiquer que l'article recherché par l'utilisateur se trouve en haut à droite de la position actuelle du terminal mobile 1, à une distance de 50 cm de celui-ci.

On peut également mettre en oeuvre un paiement sécurisé au moyen du terminal mobile 1 grâce au relevé des identifiants d'étiquettes électroniques correspondant aux articles que l'utilisateur désire acheter. Il suffit alors d'une communication avec un système de paiement lorsque l'utilisateur quitte la surface de vente.

L'invention permet également aux utilisateurs de se voir proposer une surface de vente avec une configuration optimisée. En effet, le gestionnaire d'une surface de vente peut connaître les déplacements et comportements précis des utilisateurs de terminaux mobiles 1, et déterminer ainsi une configuration de surface de vente optimisée en fonction de ces informations.

Selon un mode de réalisation facultatif, l'affichage de l'étiquette électronique 3 peut être modifié lors de la communication avec le terminal mobile 1. Par exemple, on peut prévoir un affichage plus lumineux ou avec des informations particulières dès lors qu'un périphérique radiofréquence 36 communique avec un terminal mobile 1.

De préférence, le terminal mobile est adapté pour transmettre des données à l'étiquette électronique 3 via le périphérique radiofréquence 36 de ladite étiquette électronique 3, notamment pour mettre à jour les données et éventuellement la position de l'étiquette électronique lorsque le terminal mobile 1 est utilisé par un employé de la surface de vente.

## Revendications

1. Procédé de communication de données représentatives d'une information spatialement localisée à un terminal mobile (1) en fonction de la localisation dudit terminal mobile (1) dans une surface de vente munie d'une série d'étiquettes électroniques (3) répartie, chaque étiquette électronique (3) étant identifiée par un unique identifiant d'étiquette,
ledit procédé comprenant les étapes selon lesquelles :
- un terminal mobile (1) établit une communication (S1) par radiofréquence avec un périphérique radiofréquence (36) d'une étiquette électronique (3), ledit périphérique radiofréquence (36) de l'étiquette électronique (36) étant de type NFC et ayant une portée de communication inférieure à 20 cm,
- le périphérique radiofréquence (36) de ladite étiquette électronique (3) communique (S2) audit terminal mobile (1) un identifiant d'étiquette de ladite étiquette électronique (3),
- le terminal mobile (1) communique (S3) ledit identifiant d'étiquette à un serveur central (2), ledit serveur central (2) associant à chaque identifiant d'étiquette une localisation unique qui lui est propre au moyen de données d'un planogramme,
- le serveur central (2) détermine (S4) une localisation dudit terminal mobile (1) à partir de l'identifiant d'étiquette de ladite étiquette électronique (3), au moyen de données du planogramme associant à l'identifiant d'étiquette une localisation unique qui lui est propre,
- le serveur central (2) communique (S5) au terminal mobile (1) des données représentatives d'une information spatialement localisée associée à la localisation dudit terminal mobile (1).

2. Procédé selon la revendication 1, dans lequel l'établissement de la communication entre le terminal mobile (1) et le périphérique radiofréquence (36) comprend les étapes selon lesquelles :
- un utilisateur amène le terminal mobile (1) à proximité du périphérique radiofréquence (36) de l'étiquette électronique (3), de sorte que le périphérique radiofréquence (36) soit à portée d'ondes électromagnétiques émises par le terminal mobile (1),
- ledit périphérique radiofréquence (36) est activé par l'énergie des ondes électromagnétiques émises par le terminal mobile (1) afin d'établir la communication par radiofréquence entre le périphérique radiofréquence (36) de l'étiquette électronique (3) et le terminal mobile (1).

3. Procédé selon l'une des revendications 1 et 2, dans lequel la communication entre le serveur central (2) et le terminal mobile (1) est établie via le réseau internet.

4. Procédé selon l'une des revendications 1 à 3, dans lequel les données représentatives d'une information spatialement localisée associée à la localisation dudit terminal mobile (1) prennent en compte des données spécifiques à l'utilisateur du terminal mobile (1), préalablement stockées dans une base de données (41, 44) accessible par un réseau de communication.

5. Serveur central (4) pour communication de données localisées dans une surface de vente dans laquelle est répartie une série d'étiquettes électroniques (3), chaque étiquette électronique (3) de ladite série d'étiquettes électroniques (3) étant identifiée par un unique identifiant d'étiquette et comportant un périphérique radiofréquence (36) avec lequel un terminal mobile (1) peut établir une communication pour acquérir l'identifiant d'étiquette de ladite étiquette électronique (3), ledit périphérique radiofréquence (36) de l'étiquette électronique (36) étant de type NFC et ayant une portée de communication inférieure à 20 cm, le serveur central associant à chaque identifiant d'étiquette une localisation unique qui lui est propre au moyen de données d'un planogramme et étant configuré, suite à l'activation du périphérique radiofréquence (36) d'une étiquette électronique (3) par le terminal mobile (1) afin d'établir une communication par radiofréquence avec le périphérique radiofréquence (36) de l'étiquette électronique (3) et à la communication par le périphérique radiofréquence (36) de ladite étiquette électronique (3) audit terminal mobile (1) de l'identifiant d'étiquette de ladite étiquette électronique (3), pour mettre en oeuvre les étapes selon lesquelles :
- le serveur central (2) reçoit ledit identifiant d'étiquette provenant dudit terminal mobile (1),
- le serveur central (2) détermine (S4) une localisation dudit terminal mobile (1) à partir de l'identifiant d'étiquette de ladite étiquette électronique (3), au moyen de données du planogramme associant à l'identifiant d'étiquette une localisation unique qui lui est propre,
- le serveur central (2) communique (S5) au terminal mobile (1) des données représentatives d'une information spatialement localisée associée à la localisation dudit terminal mobile (1).

6. Système de communication de données dans une surface de vente, comprenant un serveur central selon la revendication 5 et une série d'étiquettes électroniques répartie dans la surface de vente, chaque étiquette électronique (3) de ladite série d'étiquettes électroniques (3) étant identifiée par un unique identifiant d'étiquette et comportant un périphérique radiofréquence (36) avec lequel un terminal mobile (1) peut établir une communication pour acquérir l'identifiant d'étiquette de ladite étiquette électronique (3), ledit périphérique radiofréquence (36) de l'étiquette électronique (36) étant de type NFC et ayant une portée de communication inférieure à 20 cm.

7. Système selon la revendication 6, dans lequel chaque étiquette électronique (3) comporte également :
- un module de communication radiofréquence (32) pour recevoir des données représentatives d'informations relatives à un article en provenance d'une station centrale (2),
- une mémoire (33) pour stocker lesdites données,
- un microcontrôleur (34) pour commander l'affichage des informations relatives à un article,
- un écran d'affichage (31) pour l'affichage desdites informations relatives à un article.

8. Système selon l'une des revendications 6 et 7, dans lequel le périphérique radiofréquence (36) de l'étiquette électronique (3) comprend une antenne (38) et une puce électronique (37) de type NFC.

9. Système selon la revendication 8, dans lequel la puce (37) et l'antenne (38) sont agencées en des endroits différents de l'étiquette électronique (3), des connexions (39) assurant la liaison entre l'antenne (38) et la puce (37).

10. Système selon la revendication 9, dans lequel la puce (37) est connectée à un microcontrôleur (34) de l'étiquette électronique (3), et l'antenne (38) est disposée sur ou dans un boîtier (30) à l'intérieur duquel est logé ledit microcontrôleur (34).

11. Système selon l'une des revendications 6 à 10, dans lequel le terminal mobile (1) est adapté pour transmettre des données à l'étiquette électronique (3) via le périphérique radiofréquence (36) de ladite étiquette électronique (3).
